# EUROPEAN PATENT SPECIFICATION

(11) **EP 1 662 183 B1**
(45) Date of publication and mention of the grant of the patent: **29.10.2008**
(21) Application number: 05025213.9
(22) Date of filing: 18.11.2005
(51) Int. Cl.: F16H 61/02, B60K 28/16

(54) **Apparatus for controlling automated manual transmission**
Steuergerät für ein automatisiertes Getriebe
Dispositif de commande de transmission automatisée

(30) Priority: 26.11.2004 JP 2004342971
(43) Date of publication of application: 31.05.2006
(73) Proprietor: AISIN SEIKI KABUSHIKI KAISHA, Kariya-shi, Aichi-ken 448-8650 (JP)
(72) Inventor: Hosoi, Yasuhiro Intellectual Property Department, Kariya-shi Aichi-ken 448-8650 (JP)
(74) Representative: Kramer - Barske - Schmidtchen

(56) References cited:
- EP-A- 0 898 098
- DE-A1- 4 226 800
- DE-A1- 19 653 578
- DE-A1- 19 753 680
- US-A- 5 797 108
- US-A- 5 931 762

## Description

### FIELD OF THE INVENTION

This invention relates to an automated manual transmission apparatus for controlling an automated manual transmission of a vehicle. More particularly, the present invention pertains to an automated manual transmission apparatus, which, when a slip condition of a driving wheel is detected, performs a specific control such as an inhibiting control of a shift operation.

### BACKGROUND

When a vehicle starts moving on a road having a small friction coefficient, such as on an icy road, a driving wheel may on occasions slip. In a slip condition, because the wheel is made idle, a vehicle speed (i.e., a wheel speed), calculated on the basis of a rotational speed of the wheel, increases. However the vehicle speed in practice (i.e., the actual vehicle speed) remains at a lower level. On the basis of, for example, the vehicle speed and a degree of an accelerator opening, an automated manual transmission apparatus detects conditions of the vehicle, and then performs an automatic shift operation. However, when the vehicle falls into the aforementioned slip condition, because a sensed vehicle speed (i.e., the wheel speed) and the vehicle speed in practice (i.e., the actual vehicle speed) are dissociated from one another, the end result is that the automated manual transmission apparatus performs an unnecessary shift operation.

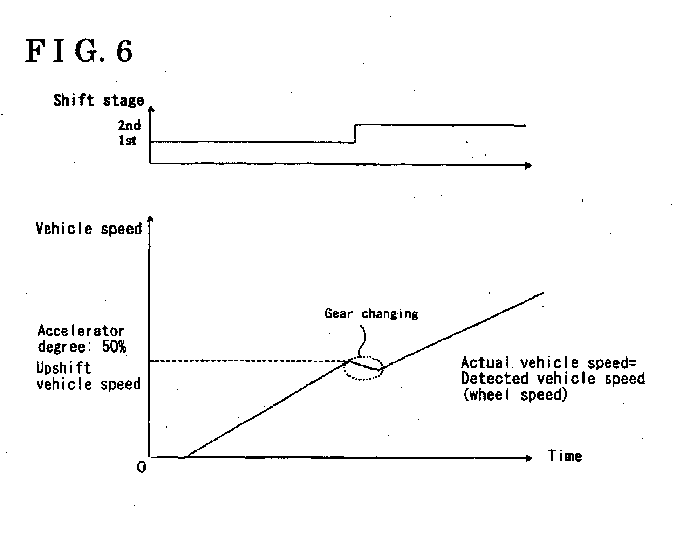

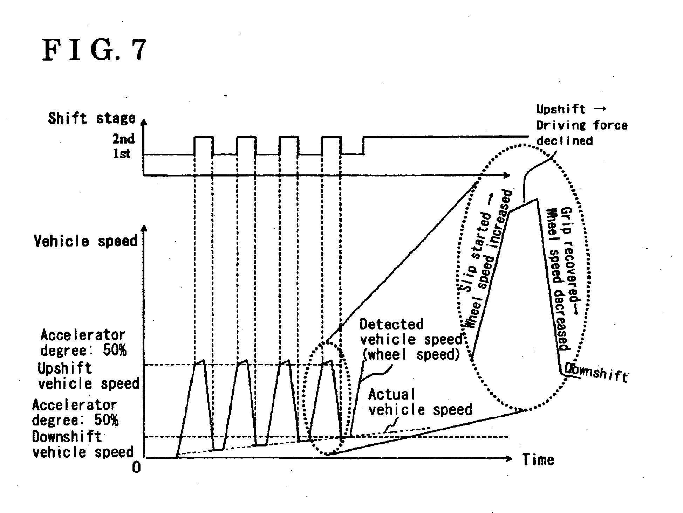

Illustrated in Fig. 6 is the behavior of an automated manual transmission in a condition where, after a vehicle is started to move, by keeping an accelerator opening at 50%, the wheel continues to grip. In contrast, illustrated in Fig. 7 is the behavior of an automated manual transmission in a condition where, immediately after the vehicle is started to move, the wheel falls into a slip condition. As illustrated in Fig. 6, if the wheel continues to grip, the sensed vehicle speed (i.e., the wheel speed) conforms with the vehicle speed in practice (i.e., the actual vehicle speed). However, in the slip condition illustrated in Fig. 7, because of a sudden increase in the sensed vehicle speed (i.e:, the wheel speed), an upshift operation that does not conform with the vehicle speed in practice (i.e., the actual vehicle speed) is initiated. Accordingly, a differential gear is heavily burdened, and moreover, because the differential rotational speed between an engine rotational speed and an input shaft rotational speed of the transmission increases, the load applied to the clutch is increased and heat is thereby generated in the clutch. Moreover, when a driving force is decreased because of an upshift operation, or when a closing operation of a throttle valve, a clutch disengagement operation, or the like is performed, drivability of the vehicle deteriorates to the extent that a shock caused by recovery of the grip is generated, and then, because of a reduction in a detected vehicle speed, a downshift operation is performed.

In view of the above mentioned considerations, JPS64(1989)-007259B discloses a technology whereby, if rotational acceleration of a rotation member of an automated manual transmission corresponding to a speed of a driving wheel becomes superior, or equal, to a predetermined value, the driving wheel is determined to be in a slip condition, and an upshift operation is inhibited.

Further, JPH10(1998)-169772A discloses a controller for an automated manual transmission that, like in JPS64(1989)-007259B, on the basis of variations of a rotational speed of a rotation member (i.e., the vehicle speed), detects a slip condition, and inhibits a shift operation. Further, by comparing the vehicle speed estimated on the basis of both vehicle acceleration and elapsed time, with the aforementioned rotational speed of the rotation member (i.e., the vehicle speed), this controller for an automated manual transmission determines that the vehicle is started to recover its grip out of the slip condition, and accordingly terminates inhibiting control of an upshift operation.

As described above, automated manual transmission apparatuses are known, which determine, on the basis of the wheel speed, or the acceleration of the rotation member of the transmission, whether or not the vehicle is in a slip condition. However, because of a matter of detecting ability of rotational speeds, computer malfunction caused by a miniscule slip or a noise, or delays caused by a noise removal filter, calculating rotational speed is not performed appropriately and the automated manual transmission apparatuses may on occasions fail to perform an accurate detection of the slip condition and appropriate control of the transmission.

For example, as illustrated in Fig. 7, the slip condition and the grip condition are repeatedly generated. However, if the beginning of the slip cannot be accurately detected, the inhibiting control of a shift operation may occasionally be inappropriately operated. Further, because of the very fact that it is hard to detect the beginning of the slip, the controller for the automated manual transmission disclosed in JPH10(1998)-169772A, which corresponds to DE-A-197 53 680 and is considered to constitute the closest prior art, eases, to some degree, conditions for determining the beginning of the slip, and then terminates, without fail, the inhibiting control of a shift operation.

A need thus exists for an automated manual transmission apparatus, which detects, without fail, the beginning of the slip of a driving wheel, and performs, a specific control appropriate for the slip condition such as an inhibiting control of a shift operation. The present invention has been made in view of the above circumstances and provides such an apparatus.

### SUMMARY OF THE INVENTION

According to an aspect of the present invention, an automated manual transmission apparatus for performing, to an automated manual transmission, a specific control different from a normal shift operation when a driving wheel is in a slip condition, characterized in that the automated manual transmission, on the basis of at least variations of a rotational speed of a rotation member, the rotational speed which is proportional to a rotational speed of the driving wheel, detects a recovery of a grip of the driving wheel out of the slip condition, and performs the specific control.

### BRIEF DESCRIPTION OF THE DRAWINGS

The foregoing and additional features and characteristics of the present invention will become more apparent from the following detailed description considered with reference to the accompanying drawings, wherein:

Fig. 1 is a block diagram showing a structure of a vehicle control system including an automated manual transmission apparatus to which the present invention can be applied;

Fig. 2 is a flowchart for explaining a flow of a slip determining process according to the embodiment of the present invention;

Fig. 3 is a flowchart for explaining an entire operation of the automated manual transmission apparatus according to the embodiment of the present invention;

Fig. 4 is a graph for explaining the behavior of a vehicle in a condition where, after a grip is detected, specific control is performed to hold a shift stage at a first shift stage;

Fig. 5 is a graph for explaining the behavior of a vehicle in a condition where, after a grip is detected, specific control is performed to hold a shift stage at a second shift stage;

Fig. 6 is a graph for explaining an automatic shift operation, by means of normal control, from a first shift stage into a second shift stage; and

Fig. 7 is a graph for explaining the behavior of a vehicle during a slip.

### DETAILED DESCRIPTION

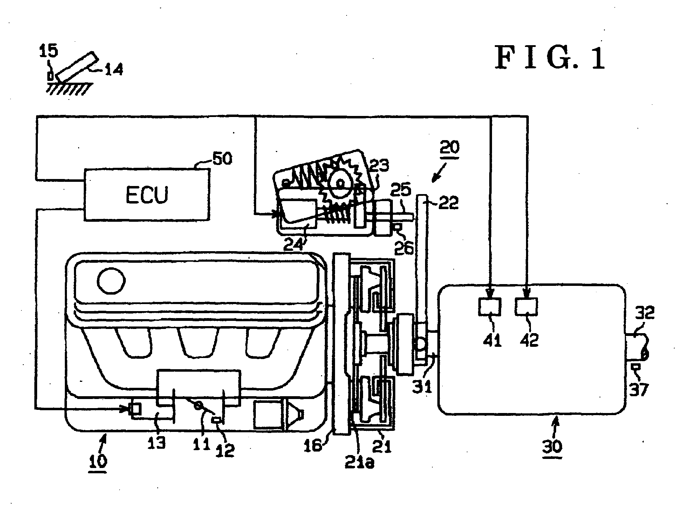

An embodiment of the present invention will be explained hereinbelow with reference to the attached drawings. Illustrated in Fig. 1 is a vehicle system including an automated manual transmission apparatus according to the embodiment of the present invention. With reference to Fig. 1, an output shaft (i.e., a crankshaft) of an engine 10, to which an automatic clutch 20 is attached, is connected, through the automatic clutch 20, to a transmission 30.

The engine 10 includes a throttle valve 11 for adjusting an amount of intake air, a throttle sensor 12 for detecting a degree of opening of the throttle valve 11 (i.e., a degree of a throttle opening), and a throttle actuator 13 for opening and closing the throttle valve 11.

The automatic clutch 20 includes a mechanical (i.e., a dry type - single disc) friction clutch 21, a clutch lever 22 (i.e., a release fork), and a clutch actuator 23 which, through the clutch lever 22, controls a rotational transmission of the friction clutch 21.

The friction clutch 21 includes a clutch disc 21a which is integrally rotatable with an input shaft 31 of the transmission 30. By means of variations of a pressure load of the clutch disc 21a relative to a flywheel 16, the degree of rotational transmission between the flywheel 16 and the clutch disc 21a can be varied.

The transmission 30 includes the input shaft 31 and an output shaft 32. The input shaft 31 of the transmission 30 is connected to the friction clutch 21 so as to be capable of transmitting a driving force from the friction clutch 21, and the output shaft 32 of the transmission 30 is connected to an axle(not shown) so as to be capable of transmitting the driving force to the axle. The transmission 30 is provided with shift actuators 41 and 42 for changing shift stages, and by means of driving the shift actuators 41 and 42; the transmission 30 can select a plurality of desirable shift stages..

Further, the transmission 30 is provided with, at a side of the output shaft 32, a rotational speed sensor 37(i.e., a rotational speed detecting portion) for detecting a rotational speed of the output shaft 32. On the basis of the rotational speed of the output shaft 32, a vehicle speed (i.e., a wheel speed) and a degree of acceleration of the vehicle can be calculated.

Moreover, with reference to Fig.1 (see upper left side), an accelerator pedal 14 and an accelerator sensor 15 are illustrated. The accelerator pedal 14 is provided at a vehicle compartment and operated by a vehicle driver. The accelerator sensor 15 detects the extent to which the accelerator pedal 14 is being operated (i.e., the degree of accelerator opening).

An electronic control unit 50 (i.e., an ECU) includes a microcomputer (i.e., a CPU) as a main element, a read-only-memory (i.e:, a ROM) for memorizing various programs and maps, a random-access-memory (i.e., a RAM) for reading out and writing down various data, an electronically erasable and programmable read only memory (i.e., an EEPROM) for storing data without a back-up power source, and a timer. Further, in addition to the aforementioned sensors such as the accelerator sensor 15 and the rotational speed sensor 37, the ECU 50 is connected to various other sensors such as a clutch stroke sensor 26, a throttle sensor, an engine rotational speed sensor, an input shaft rotational speed sensor, a shift sensor, and a gear sensor. By means of programs installed therein, the ECU 50 detects, on the basis of values inputted by the various sensors, vehicle driving conditions (i.e., the degree of throttle opening, the degree of accelerator opening, an engine rotational speed, a rotation transmitting condition by means of the friction clutch 21, an input shaft rotational speed, the vehicle speed, and a shift position, etc.), and, in response to the vehicle driving conditions, the ECU 50 controls the clutch actuator 23, the shift actuators 41 and 42, and an idle speed control valve (i.e., ISC valve). Further, the ECU 50 includes a slip determining portion, a grip recovery determining portion, a specific control portion, and a slip condition changing portion.

According to the embodiment of the present invention, the ECU 50 obtains, on the basis of a detected value of the accelerator sensor 15, the extent to which the accelerator pedal 14 is being operated (i.e., the degree of accelerator opening), and, on the basis of a detected value of the output rotational speed sensor 37, a sensing speed (i.e., the wheel speed). Accordingly, on the basis of the obtained accelerator opening and the obtained wheel speed, the ECU 50 determines whether or not a shift operation is needed, and appropriately activates the shift actuators 41 and 42. Thus it becomes possible for the ECU 50 to change gear trains (i.e., shift stages).

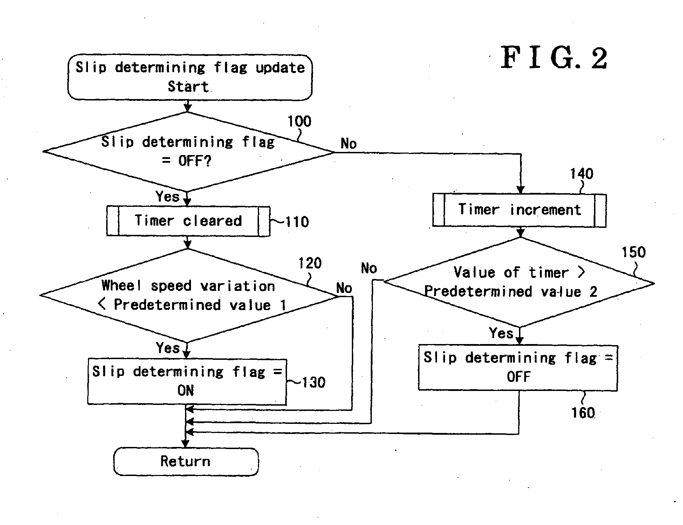

An operation of the automated manual transmission apparatus according to the embodiment of the present invention will now be explained with reference to the accompanying drawings. Illustrated in Fig. 2 is a flowchart indicating a slip determining process that is performed, by means of the ECU 50, at predetermined timings.

In step 100, the ECU 50 reads out a status of a slip determining flag, whether it is ON or OFF, and judges whether or not the vehicle is in a slip condition.

In step 110, the ECU 50 clears the timer if the status of the slip determining flag is detected as OFF in step 100. Then, in step 120, the ECU 50 determines whether or not variations of the wheel speed obtained on the basis of a detected value of the output rotational speed sensor 37 are inferior to a predetermined value 1 (i.e., a first predetermined value). In step 130, the ECU 50 changes the status of the slip determining flag to ON if the variations of the wheel speed are inferior to the predetermined value 1 (Step 120:YES). The predetermined value 1 is a value set for detecting a sudden lowering of the wheel speed generated in a condition where a driving wheel recovers its grip, by means of operations because of falling into the slip condition, such as a closing operation of the throttle valve; a disengagement of the clutch; or a lowering of a gear ratio caused by an upshift operation. Therefore, according to the embodiment of the present invention, the predetermined value 1 is indicated as a negative value.

In contrast, the procedure progresses to step 140 if the status of the slip determining flag is detected as ON in step 100, in other words, if the vehicle is judged as being in the slip condition. In step 140, the slip condtion changing portion begins to increment a value of a timer and then the procedure progresses to step 150. In step 150, until the value of the timer exceeds a predetermined value 2 (i.e., a second predetermined value), defined as a duration of a specific control (Step 150:YES), the the slip condtion changing portion 50 maintains the status of the slip determining flag at ON (Step 150: NO). Then, the procedure progresses to step 160 when the value of the timer exceeds the predetermined value 2. In step 160, the slip condtion changing portion returns the status of the slip determining flag to OFF. Accordingly, if the vehicle is once judged as being in the slip condition, notwithstanding variations in the wheel speed, the vehicle is considered to be in the slip condition for the duration of a period defined as the predetermined value 2.

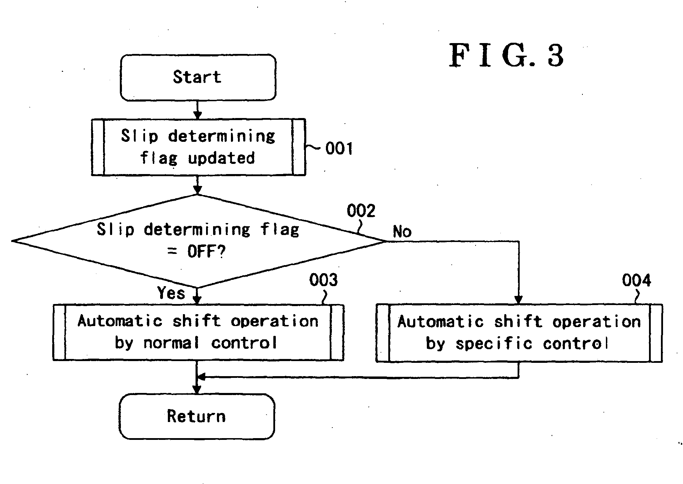

An example will now be explained of a changing operation of the control of the automated manual transmission apparatus using the slip determining flag that is updated as described above. Illustrated in Fig. 3 is a flowchart indicating a changing process of an operation mode that is performed, by means of the ECU 50, at predetermined timings.

In step 001, the ECU 50 performs the aforementioned slip determining flag updating process shown in Fig. 2. In step 002, in response to the status of the slip determining flag (ON or OFF) appropriately updated in step 001, the ECU 50 changes an operation mode of the transmission, either by means of a normal shift operation or by means of a specific control.

The procedure progresses to step 003 if the status of the slip determining flag is detected as OFF. In step 003, the ECU 50 performs an automated manual transmission control, by means of a normal shift operation, by use of transmission line data corresponding to a shift stage by which the driving force is transmitted. For example, as illustrated in Fig. 6, while the vehicle is driving in a first shift stage, in a condition where the degree of the accelerator opening is 50 % and where the detected value of the output rotational speed sensor 37 (i.e., the wheel speed) is superior to a predetermined value, in order to perform a shift operation into a second shift stage, the ECU 50 activates the clutch actuator 23 and the shift actuators 41 and 42 in an appropriate manner.

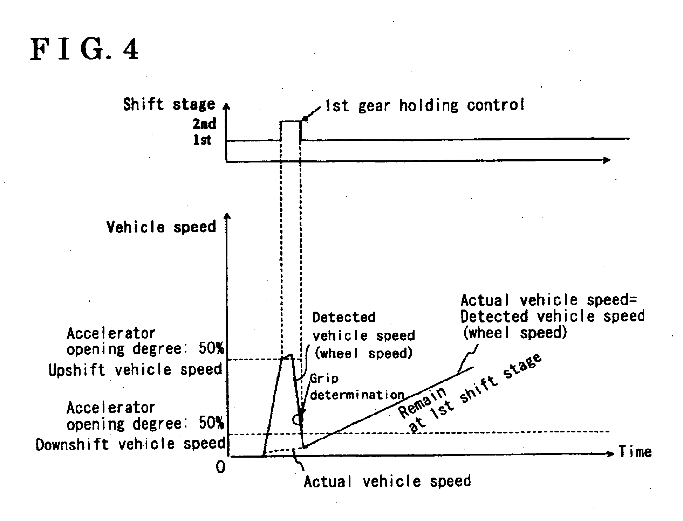

In contrast, the procedure progresses to step 004 if the status of the slip determining flag is detected as ON. In step 004, the ECU 50 performs the automated manual transmission control by means of a specific control. Illustrated in Fig. 4 is the behavior of the vehicle in a condition where, after the grip is detected, a specific control is performed to hold the shift stage at a first shift stage. As illustrated in Fig. 4, when the grip of the driving wheel is detected because of a sudden lowering of the wheel speed, the ECU 50 performs a specific control, within a predetermined period, to allow a shift operation down to a first shift stage, and then to hold a shift stage at the first shift stage. Accordingly, thereafter, even if variations of the accelerator opening or the wheel speed are detected, which are normally considered as conditions that make an upshift operation possible, a shift operation would still be inhibited. Thereby, with the configuration of the automated manual transmission apparatus according to the embodiment of the present invention, loads applied to the differential gear, and to the clutch, can be reduced, and, furthermore, drivability is improved.

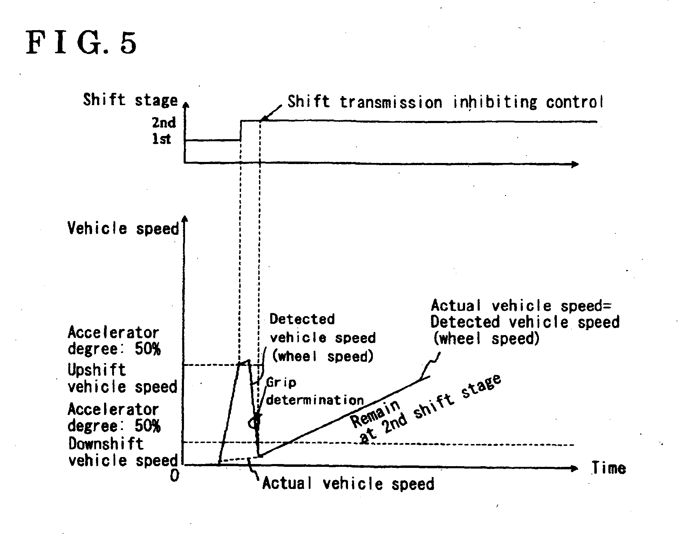

Illustrated in Fig. 5 is the behavior of a vehicle in a condition where, after the grip is detected, a specific control is performed to hold the shift stage at a second shift stage. As illustrated in Fig. 5, when, because of a sudden lowering of the wheel speed, the grip of the driving wheels is detected, the ECU 50 performs a specific control to hold the shift stage at a second shift stage for a predetermined period. With the benefit of such specific control, compared to a condition shown in Fig. 4, the ability of a vehicle to start, for example, on ice can be enhanced.

Examples of specific control are described above. Alternatively, or in addition, by amending a shift line (i.e., a map), inhibition of a shift operation, a changing operation of an actually selected shift stage into a predetermined shift stage, or a holding operation of the shift stage at an actually selected shift stage, can all be performed. Further, by reducing a vehicle speed detected within a predetermined period and the degree of accelerator opening, the automated manual transmission apparatus can perform controls identical to the specific controls described above. Moreover, for example, the automated manual transmission apparatus may control an output level of the engine.

With the configuration of the automated manual transmission apparatus according to the embodiment of the present invention, on the basis of variations of the driving wheel speed, whether or not the variations are inferior to the predetermined value 1, the grip is detected. However, the invention is not limited thereto. As long as the recovery of the grip of the driving wheels can be detected on the basis of variations of the rotational speed of one of the rotation members, other variations of the invention are possible.

For example, the automated manual transmission apparatus may determine the beginning of the recovery of the grip in conditions where lowering of a wheel speed which is detected when the driving force is declined, relative to a wheel speed, which is detected before the driving force is declined, are of a greater degree than lowering of the wheel speed equivalent to the corresponding driving force (the degree of reduction in speed that is normally expected during a shift operation as illustrated by a circular broken line in Fig. 6). Further, the automated manual transmission apparatus may determine the recovery of the grip in conditions where variations per hour of variations of the wheel speed are inferior to a predetermined value.

On the basis of the variations of the wheel speed which is read out, at predetermined timings, from a rotational speed sensor, whether or not the variations of the wheel speed exceed a predetermined threshold value, the grip recovery determining portion determines whether or not the driving wheel recovers the grip out of the slip condition.

With the configuration of the automated manual transmission apparatus according to the embodiment of the present invention, a specific control is performed at the time of the starting of the vehicle. However, in the case of a vehicle that is moving in the slip condition, the automated manual transmission apparatus may perform a specific control such as a holding control of a gear stage at a specific shift stage, by detecting a recovery of the grip of the driving wheel, and then determining whether or not the driving wheel is in the slip condition.

According to the embodiment of the present invention, the automated manual transmission apparatus includes the automatic clutch using the clutch actuator 23, and the transmission 30 using the shift actuators 41 and 42. However, the automated manual transmission apparatus may include various automatic clutches and various transmissions.

With the configuration of the automated manual transmission apparatus according to the embodiment of the present invention, slip that is already generated can be reliably detected, and a specific control can be started at an optimal timing. As a result, the behavior of the transmission during the slip condition can be stabilized, and the clutch can be protected.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An automated manual transmission apparatus for performing, to an automated manual transmission (30), a specific control different from a normal shift operation when a driving wheel is in a slip condition, **characterized in that** the automated manual transmission apparatus,
on the basis of at least variations of a rotational speed of a rotation member, which rotational speed is proportional to a rotational speed of the driving wheel, detects a recovery of a grip of the driving wheel out of the slip condition, and performs the specific control.

2. An automated manual transmission apparatus according to claim 1, comprising:
a rotational speed detecting portion for detecting the rotational speed of the driving wheel;
a slip determining portion (50) for determining the slip condition of the driving wheel on the basis of the rotational speed of the driving wheel;
a grip recovery determining portion (50) for determining the recovery of the grip on the basis of variations of the rotational speed of the driving wheel; and
a specific control portion (50) for performing the specific control to the automatic transmission when the grip is recovered out of the slip condition.

3. An automated manual transmission apparatus according to claim 2, wherein
the specific control is a shift operation inhibiting control for inhibiting a shift operation for a predetermined period.

4. An automated manual transmission apparatus according to claim 2 or 3, wherein
on the basis of the variations of the wheel speed which is read out, at predetermined timings, from a rotational speed sensor, whether or not the variations of the wheel speed exceed a predetermined threshold value, the grip recovery determining portion determines whether or not the driving wheel recovers the grip out of the slip condition.

5. An automated manual transmission apparatus according to any one of claims 2 to 4, further comprising:
the automated manual transmission (30), wherein
the rotational speed detecting portion includes
an output rotational speed sensor (37) provided at a side of an output shaft (32) of the automated manual transmission (30) and for detecting a rotational speed of the output shaft (32).

6. An automated manual transmission apparatus according to claim 5, further comprising:
an accelerator sensor (15) for detecting a degree of operation of an accelerator pedal, wherein
on the basis of the degree of operation detected by the accelerator sensor and the wheel speed detected by the output rotational speed sensor (37), the specific control portion (50) determines a necessity of a shift operation.

7. An automated manual transmission apparatus according to any one of claims 2 to 6, wherein
on the basis of the variations of a driving wheel speed, whether or not the variations are inferior to a first predetermined value, the grip recovery detecting portion detects the grip.

8. An automated manual transmission apparatus according to any one of claims 2 to 7, further comprising:
a slip condition changing portion (50) wherein,
when the driving wheel is determined to be at the slip condition, the slip condition changing portion (50) increments a value of a timer and continues, until the value of the timer exceeds a second predetermined value, the determination that the driving wheel is at the slip condition, and, when the value of the timer reaches the second predetermined value, the slip condition changing portion (50) terminates the determination that the driving wheel is at the slip condition.

9. An automated manual transmission apparatus according to any one of claims 2 to 8, wherein
by changing a shift line, the specific control portion (50) performs an inhibition of a shift operation, a shift operation into a predetermined shift stage, or a holding operation of an actually selected shift stage.

## Patentansprüche

1. Automatisierte Handschaltgetriebevorrichtung zum Durchführen einer spezifischen Steuerung an einem automatisierten Handschaltgetriebe (30), die sich von einem normalen Schaltvorgang unterscheidet, wenn sich ein Antriebsrad in einem Schlupfzustand befindet, **dadurch gekennzeichnet, dass** die automatisierte Handschaltgetriebevorrichtung
auf der Basis von zumindest Abweichungen einer Drehzahl eines Drehelements, die proportional zu einer Drehzahl des Antriebsrads ist, eine Wiederherstellung der Haftung des Antriebsrads aus dem Schlupfzustand erfasst, und die spezielle Steuerung durchführt.

2. Automatisierte Handschaltgetriebevorrichtung nach Anspruch 1, enthaltend:
einen Drehzahlerfassungsbereich zum Erfassen der Drehzahl des Antriebsrads;
einen Schlupfmittlungsbereich (50) zum Ermitteln des Schlupfzustands des Antriebsrads auf der Basis der Drehzahl des Antriebsrads;
einen Haftungswiederherstellungsermittlungsbereich (50) zum Ermitteln der Wiederherstellung der Haftung auf der Basis von Abweichungen der Drehzahl des Antriebsrads; und
einen speziellen Steuerbereich (50) zum Durchführen der speziellen Steuerung am automatisierten Getriebe, wenn aus dem Schlupfzustand die Haftung wiederhergestellt ist.

3. Automatisierte Handschaltgetriebevorrichtung nach Anspruch 2, wobei
die spezielle Steuerung eine Schaltvorgangblockierungssteuerung zum Blockieren eines Schaltvorgangs für eine bestimmte Zeit ist.

4. Automatisierte Handschaltgetriebevorrichtung nach Anspruch 2 oder 3, wobei der Haftungswiederherstellungsermittlungsbereich auf der Basis der Abweichungen der Raddrehzahl, die in bestimmten Zeitintervallen von einem Drehzahlsensor ausgegeben wird, ob die Abweichungen der Raddrehzahl einen vorbestimmten Grenzwert überschreiten oder nicht, ermittelt, ob das Antriebsrad aus dem Schlupfzustand die Haftung wiedererlangt.

5. Automatisierte Handschaltgetriebevorrichtung nach einem der Ansprüche 2 bis 4, weiter enthaltend:
das automatisierte Handschaltgetriebe (30), wobei
der Drehzahlerfassungsbereich enthält:
einen Ausgangsdrehzahlsensor (37), der an einer Seite einer Ausgangswelle (32) des automatisierten Handschaltgetriebes (30) vorgesehen ist, und der eine Drehzahl der Ausgangswelle (32) erfasst.

6. Automatisierte Handschaltgetriebevorrichtung nach Anspruch 5, weiter enthaltend:
einen Beschleunigungssensor (15) zum Erfassen eines Ausmaßes der Betätigung eines Gaspedals,
wobei
der spezielle Steuerbereich (50) basierend auf dem vom Beschleunigungssensor erfassten Ausmaß der Betätigung und der vom Ausgangsdrehzahlsensor (37) erfassten Raddrehzahl eine Notwendigkeit eines Schaltvorgangs bestimmt.

7. Automatisierte Handschaltgetriebevorrichtung nach einem der Ansprüche 2 bis 6,
wobei
der Haftungswiederherstellungsermittlungsbereich auf der Basis einer Antriebsraddrehzahl, ob die Abweichungen einen ersten vorbestimmten Wert unterschreiten oder nicht, die Haftung ermittelt.

8. Automatisierte Handschaltgetriebevorrichtung nach einem der Ansprüche 2 bis 7, weiter enthaltend:
einen Schlupfzustandänderungsbereich (50) wobei,
wenn bestimmt wird, dass sich das Antriebsrad im Schlupfzustand befindet, der Schlupfzustandsänderungsbereich (50) einen Wert eines Zeitschalters erhöht und die Bestimmung, dass sich das Antriebsrad im Schlupfzustand befindet, fortführt, bis der Wert des Zeitschalters einen zweiten vorbestimmten Wert überschreitet, und der Schlupfzustandsänderungsbereich (50) die Bestimmung, dass sich das Antriebsrad im Schlupfzustand befindet, beendet, wenn der Wert des Zeitschalters den zweiten vorbestimmten Wert erreicht.

9. Automatisierte Handschaltgetriebevorrichtung nach einem der Ansprüche 2 bis 8, wobei
der spezielle Steuerbereich (50) eine Blockierung eines Schaltvorgangs, einen Schaltvorgang in eine vorbestimmte Schaltstufe, oder einen Haltevorgang einer aktuell ausgewählten Schaltstufe, durchführt.

## Revendications

1. Dispositif de transmission manuelle automatisée pour effectuer, sur une transmission manuelle automatisée (30), une commande spécifique différente d'une opération de changement de vitesse normale lorsqu'une roue motrice est dans un état de glissement, **caractérisé en ce que** le dispositif de transmission manuelle automatisée, sur la base au moins de variations d'une vitesse de rotation d'un élément rotatif, laquelle vitesse de rotation est proportionnelle à une vitesse de rotation de la roue motrice, détecte une récupération d'adhérence de la roue motrice hors de l'état de glissement, et effectue la commande spécifique.

2. Dispositif de transmission manuelle automatisée selon la revendication 1, comportant :
une partie de détection de vitesse de rotation pour détecter la vitesse de rotation de la roue motrice ;
une partie de détermination de glissement (50) pour déterminer l'état de glissement de la roue motrice sur la base de la vitesse de rotation de la roue motrice ;
une partie de détermination de récupération d'adhérence (50) pour déterminer la récupération de l'adhérence sur la base de variations de la vitesse de rotation de la roue motrice ; et
une partie de commande spécifique (50) pour effectuer la commande spécifique sur la transmission automatique lorsque l'adhérence est récupérée hors de l'état de glissement.

3. Dispositif de transmission manuelle automatisée selon la revendication 2, dans lequel la commande spécifique est une commande d'empêchement d'opération de changement de vitesse pour empêcher une opération de changement de vitesse pendant une période prédéterminée.

4. Dispositif de transmission manuelle automatisée selon la revendication 2 ou 3, dans lequel, sur la base des variations de la vitesse de roue qui est lue, à des cadencements prédéterminés, à partir d'un capteur de vitesse de rotation, que les variations de la vitesse de roue dépassent ou non une valeur de seuil prédéterminée, la partie de détermination de récupération d'adhérence détermine si oui ou non la roue motrice récupère l'adhérence hors de l'état de glissement.

5. Dispositif de transmission manuelle automatisée selon l'une quelconque des revendications 2 à 4, comportant en outre :
la transmission manuelle automatisée (30), dans lequel
la partie de détection de vitesse de rotation comprend
un capteur de vitesse de rotation de sortie (37) agencé au niveau d'un côté d'un arbre de sortie (32) de la transmission manuelle automatisée (30), et destiné à détecter une vitesse de rotation de l'arbre de sortie (32).

6. Dispositif de transmission manuelle automatisée selon la revendication 5, comportant en outre :
un capteur d'accélérateur (15) pour détecter un degré d'actionnement d'une pédale d'accélérateur, dans lequel
sur la base du degré d'actionnement détecté par le capteur d'accélérateur, et de la vitesse de roue détectée par le capteur de vitesse de rotation de sortie (37), la partie de commande spécifique (50) détermine une nécessité d'opération de changement vitesse.

7. Dispositif de transmission manuelle automatisée selon l'une quelconque des revendications 2 à 6, dans lequel
sur la base des variations d'une vitesse de roue motrice, que les variations soient inférieures ou non à une première valeur prédéterminée, la partie de détection de récupération d'adhérence détecte l'adhérence.

8. Dispositif de transmission manuelle automatisée selon l'une quelconque des revendications 2 à 7, comportant en outre :
une partie de changement d'état de glissement (50), dans lequel,
lorsque la roue motrice est déterminée comme étant dans un état de glissement, la partie de changement d'état de glissement (50) augmente une valeur d'un cadenceur, et continue, jusqu'à ce que la valeur du cadenceur dépasse une seconde valeur prédéterminée, la détermination que la roue motrice est dans l'état de glissement et, lorsque la valeur du cadenceur atteint la seconde valeur prédéterminée, la partie de changement d'état de glissement (50) termine la détermination que la roue motrice est dans l'état de glissement.

9. Dispositif de transmission manuelle automatisée selon l'une quelconque des revendications 2 à 8, dans lequel
en changeant une ligne de changement vitesse, la partie de commande spécifique (50) réalise l'empêchement d'une opération de changement de vitesse, d'une opération de changement de vitesse dans un étage de boîte de vitesses prédéterminé, ou une opération de maintien d'un étage de boîte de vitesses déjà sélectionné.
